# EUROPEAN PATENT APPLICATION

(11) **EP 1 895 424 A1**
(43) Date of publication of application: **05.03.2008**
(21) Application number: 06757047.3
(22) Date of filing: 06.06.2006
(51) Int. Cl.: G06F 13/00

(54) **CONTENT RELAYING DEVICE AND CONTENT RELAYING METHOD**

(30) Priority: 07.06.2005 JP 2005167259
(71) Applicant: NTT DoCoMo Inc., Chiyoda-Ku Tokyo 100-6150 (JP)
(72) Inventor: KIKUCHI, Daisuke, c/o NTT DoCoMo, Inc., IP Dept., Tokyo 100-6150 (JP); SATO, Yohei, c/o NTT DoCoMo, Inc., IP Dept., Tokyo 100-6150 (JP)
(74) Representative: Bockhorni, Josef
(86) International application number: PCT/JP2006/311307
(87) International publication number: WO 2006/132232

(57) **Abstract**

A content relay apparatus and content relay method are provided as an apparatus and method capable of effectively reducing an access time to a content server even in a case where a content is provided to a lot of terminals as receivers.

Concerning a content provided by a content server 40 in group A with a high access frequency, a content relay apparatus 1 stores the content in a content storing unit 107 upon first transmission thereof to a communication terminal 20, and the content is retrieved from the content storing unit 107 and then transmitted to the communication terminal 20 upon second or subsequent transmission. Therefore, even if there are a lot of communication terminals 20 and accesses are concentrated on the content server 40 in group A, the content stored in the content storing unit 107 is transmitted to all the communication terminals 20 having second or subsequent accesses, which can effectively reduce the access time.

## Description

### Technical Field

The present invention relates to a content relay apparatus and content relay method.

### Background Art

As a technology associated with provision of contents, there is, for example, the personal information terminal disclosed in Patent Document 1. This conventional terminal has a cache memory means for temporarily saving contents and, for example, is arranged to preliminarily store in the cache memory means, contents of content servers which a user of the terminal frequently accesses, thereby reducing the access time to the content servers.
Patent Document 1: Japanese Patent Application Laid-Open No. 2003-323370

### Disclosure of the Invention

### Problem to be Solved by the Invention

Incidentally, it is expected in the provision of contents that the number of terminals is extended to a large number, for example, as in the case where cell phones are employed as the terminals. In such cases, even if the terminal side is provided with the cache as in the conventional personal information terminal described above, each terminal still needs to access the content servers individually for every acquisition or updating of the contents stored in the cache. For this reason, there was the technical problem to be solved that the effect of reducing the access time to the content servers was not fully achieved.

The present invention has been accomplished in view of the above-described circumstances and an object of the invention is to provide a content relay apparatus and content relay method capable of effectively reducing the access time to content servers even in the case where contents are provided to a large number of terminals as receivers.

### Means for Solving the Problem

In order to solve the above problem, a content relay apparatus according to the present invention is a content relay apparatus for transmitting to each of a plurality of communication terminals belonging to a communication network, a content transmitted from a content server through communication means different from the communication network, the content relay apparatus comprising: request information receiving means for receiving through the communication network, transmission request information to request transmission of a content, which is transmitted from any one of the communication terminals; content transmitting means for transmitting to the communication terminal through the communication network, the content received through the communication means from the content server, in accordance with reception of the transmission request information; and determining means for determining whether the content server belongs to either a first attribute group or a second attribute group, based on an access frequency from the communication terminals; wherein, concerning a content transmitted from a content server determined to belong to the first attribute group by the determining means, the content transmitting means stores the content in content storing means upon first transmission of the transmitted content to any one of the plurality of communication terminals, and the content transmitting means transmits the content retrieved from the content storing means, upon second or subsequent transmission of the content transmitted from the content server, to any one of the plurality of communication terminals.

In this content relay apparatus, concerning the content provided by the content server belonging to the first attribute group, the transmitted content is stored in the content storing means upon the first transmission of the content to any one of the plurality of communication terminals, and the content is retrieved from the storing means and then transmitted upon the second or subsequent transmission. Therefore, even if there are a lot of communication terminals as receivers of the content and accesses are concentrated on the content server belonging to the first attribute group, the content retrieved from the storing means is transmitted to all the communication terminals having the second or subsequent accesses, which can effectively reduce the access time to the content server.

The content relay apparatus is also preferably configured as follows: concerning a content transmitted from a content server determined to belong to the second attribute group by the determining means, the content transmitting means receives the content from the content server with every reception of the transmission request information and transmits the content to the communication terminal. In this case, the content of the content server belonging to the second attribute group is not stored in the storing means, which reduces the load on the storing means.

The content relay apparatus is also preferably configured as follows: it further comprises registration accepting means for accepting registration of the content server; when the content server is registered in the registration accepting means, the determining means determines that the content server belongs to the first attribute group, and when the content server is not registered, the determining means determines that the content server belongs to the second attribute group. In this case, the apparatus side is able to figure out to which attribute group the content server belongs, and the content of the content server not registered is not stored in the storing means, which reduces the load on the storing means.

The content relay apparatus is also preferably configured as follows: it further comprises counting means for counting the access frequency to the content server from the communication terminals; when the access frequency counted by the counting means is not less than a predetermined value, the determining means determines that the content server belongs to the first attribute group, and when the access frequency is not more than the predetermined value, the determining means determines that the content server belongs to the second attribute group. In this case, the counting means enables the apparatus to accurately figure out the access frequency to each content server. Then the content retrieved from the storing means is transmitted to all the communication terminals having the second or subsequent accesses to the content provided by the content server with a high access frequency, which can effectively reduce the access time to the content server. Since the content provided by the content server with a low access frequency is not stored in the storing means, the load is reduced on the storing means.

The content relay apparatus is also preferably configured as follows: it further comprises user information storing means for storing, for each terminal identification information to identify each communication terminal, link information to a content server providing a content to be received by the communication terminal, and version information of the content already delivered from the content server to the communication terminal, in association with each other; and version confirming means for receiving the version information of the content from the content server the link information of which is stored in the user information storing means, in accordance with reception of the transmission request information from the communication terminal; when the version information received by the version confirming means is newer than the version information of the content stored in the content storing means, the content transmitting means determines that transmission of the content is the first transmission to any one of the plurality of communication terminals, and when the received version information coincides with the stored version information, the content transmitting means determines that transmission of the content is the second or subsequent transmission to any one of the plurality of communication terminals. This configuration permits the apparatus side to manage the,delivered content and the version information of the content for each communication terminal, and it becomes feasible to grasp a version update of the content in the content server and to always transmit the content of a new version to the communication terminal.

A content relay method according to the present invention is a content relay method of transmitting to each of a plurality of communication terminals belonging to a communication network, a content transmitted from a content server through communication means different from the communication network, the content relay method comprising: a reception step wherein request information receiving means receives through the communication network, transmission request information to request transmission of a content, which is transmitted from any one of the communication terminals; a transmission step wherein content transmitting means transmits through the communication network to the communication terminal, the content received through the communication means from the content server, in accordance with reception of the transmission request information; and a determination step wherein determining means determines whether the content server belongs to either a first attribute group or a second attribute group, based on an access frequency from the communication terminals; wherein in the transmission step, concerning a content transmitted from a content server determined to belong to the first attribute group by the determining means, the content transmitting means stores the content in content storing means upon first transmission of the transmitted content to any one of the plurality of communication terminals, and the content transmitting means transmits the content retrieved from the content storing means, upon second or subsequent transmission of the content transmitted from the content server, to any one of the plurality of communication terminals.

In this content relay method, concerning the content provided by the content server belonging to the first attribute group, the transmitted content is stored in the content storing means upon the first transmission thereof to any one of the plurality of communication terminals and the content retrieved from the storing means is transmitted upon the second or subsequent transmission. Therefore, even if there are a lot of communication terminals as receivers of the content and accesses are concentrated on the content server belonging to the first attribute group, the content retrieved from the storing means is transmitted to all the communication terminals having the second or subsequent accesses, which can effectively reduce the access time to the content server.

### Effect of the Invention

As described above, the content relay apparatus and content relay method according to the present invention effectively reduce the access time to the content server even in the case where the content is provided to a large number of terminals as receivers.

### Brief Description of the Drawings

Fig. 1 is a configuration diagram showing a content relay apparatus according to the first embodiment of the present invention.
Fig. 2 is a drawing showing a content receiving screen in a communication terminal.
Fig. 3 is a drawing showing an example of information stored in a user information database.
Fig. 4 is a drawing showing an example of information stored in a content storing unit.
Fig. 5 is a sequence diagram showing an operation of the content relay apparatus shown in Fig. 1.
Fig. 6 is a flowchart showing a processing procedure of a content combining unit in a case where it acquires a content of a content server belonging to group A.
Fig. 7 is a flowchart showing a processing procedure of the content combining unit in a case where it acquires a content of a content server belonging to group B.
Fig. 8 is a configuration diagram showing a content relay apparatus according to the second embodiment of the present invention.

### Description of Reference Symbols

1, 50 content relay apparatus; 10 communication network; 20 communication terminals; 30 Internet (communication means); 40 content servers; 101 request information receiving unit (request information receiving means); 102 version confirming unit (version confirming means); 103 user information database (user information storing means); 104 determining unit (determining means); 105 server registration accepting unit (registration accepting means); 106 content combining unit (content transmitting means); 107 content storing unit (content storing means); 108 content acquiring unit (content transmitting means); 109 content transmitting unit (content transmitting means); 110 access frequency counter (counting means).

### Best Mode for Carrying out the Invention

The preferred embodiments of the content relay apparatus and content relay method according to the present invention will be described below in detail with reference to the drawings.

### [First Embodiment]

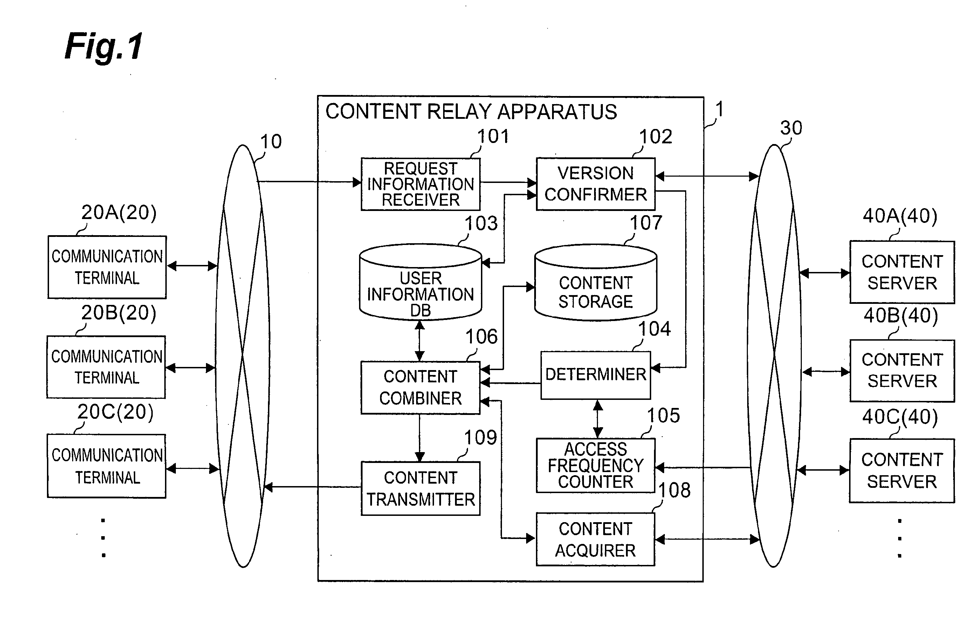

Fig. 1 is a configuration diagram of content relay apparatus 1 according to the first embodiment of the present invention. The content relay apparatus 1 will be described in detail with reference to Fig. 1. As shown in Fig. 1, the content relay apparatus 1 is connected through a communication network 10 to a plurality of communication terminals 20 (20A, 20B, 20C,...) and is able to exchange information with them. The content relay apparatus 1 is also connected through Internet (communication means) 30 to a plurality of content servers 40 (40A, 40B, 40C,...) and is also communicable with these servers. This configuration establishes a system for implementing a content delivery service from the content servers 40 to the communication terminals 20 and the content relay apparatus 1 is configured as an apparatus for relaying delivery of contents in the system. Next, each of the components will be described.

A communication terminal 20 is a device that is used by a user making use of the content delivery service and is, for example, configured as a cell phone having the ordinary voice call function and various data communication functions including the function of accessing and browsing Web pages, the e-mail transmission function, and so on. This communication terminal 20 physically has a CPU (central processing unit), storage devices such as memories, input devices such as push buttons, and so on.

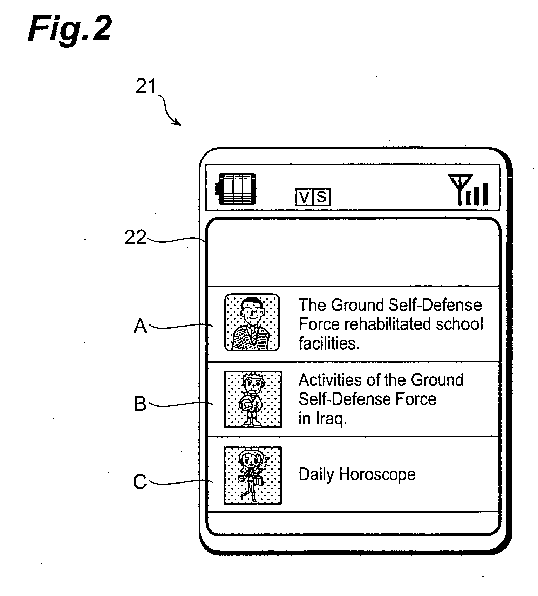

When the communication terminal 20 accesses the content relay apparatus 1, a content receiving screen 22 is displayed in a display 21 of the communication terminal 20, as shown in Fig. 2. The content receiving screen 22 is assigned channels A, B, and C as regions for displaying a plurality of contents (three contents in the present embodiment), and is arranged so that contents of content servers 40A, 40B, 40C preliminarily registered by a user of the communication terminal 20 can be simultaneously displayed in the respective channels A, B, C.

For implementing new acquisition or updating of the contents displayed in the respective channels A, B, C, the communication terminal 20 transmits transmission request information for requesting transmission of contents, to the content relay apparatus 1. This transmission request information also contains terminal identification information (e.g., a phone number of the communication terminal 20) for identifying the communication terminal 20. When the communication terminal 20 receives the contents transmitted from the content relay apparatus 1 in accordance with the transmission of the transmission request information, it displays the contents in the corresponding channels A, B, C to update the current images. The timing of the transmission of the transmission request information may be set, for example, at each time point when the user pushes a control button (not shown); or, the communication terminal 20 may be provided with a timer (not shown) and the transmission timing may be set at a time point when this timer has counted a predetermined time duration.

Referring again to Fig. 1, a content server 40 is, for example, a server that is owned by a service provider or the like for providing contents to communication terminals 20. The content server 40 is physically a computer system equipped with a CPU, memories, a communication interface, a storage part such as a hard disk, a display part such as a display, and so on, and stores such contents as music, video, current affairs, and information-retrieval result information. These contents are constantly updated to the latest versions (e.g., version "1.01") by the service provider or the like.

When the content server 40 receives version request information to request transmission of version information of a content, from the content relay apparatus 1, it transmits the currently stored version information of the content to the content relay apparatus 1. When the content server 40 receives download request information to request a download of a content, from the content relay apparatus 1, it transmits the corresponding content along with its version information to the content relay apparatus 1. The content server 40 is classified under two attribute groups in the content relay apparatus 1, depending upon whether it is preliminarily registered in the content relay apparatus 1. Namely, a registered content server 40 already registered in the content relay apparatus 1 is regarded as one belonging to group A (first attribute), and an unregistered content server 40 is regarded as one belonging to group B (second attribute). Then this classification makes a difference in content transmission control in the content relay apparatus 1. The details of this control will be described later.

Subsequently, the above-described content relay apparatus 1 will be described in detail. The content relay apparatus 1 is physically a computer system equipped with a CPU, memories, a communication interface, a storage part such as a hard disk, a display part such as a display, and so on. The content relay apparatus 1 is equipped with the following functional components: request information receiving unit (request information receiving means) 101, version confirming unit (version confirming means) 102, user information database (user information storing means) 103, determining unit (determining means) 104, server registration accepting unit (registration accepting means) 105, content combining unit (content transmitting means) 106, content storing unit (content storing means) 107, content acquiring unit (content transmitting means) 108, and content transmitting unit (content transmitting means) 109. Next, each of the components of the content relay apparatus 1 will be described.

The request information receiving unit 101 is a part that receives the transmission request information to request transmission of a content, through the communication network 10 from any one of the communication terminals 20. The request information receiving unit 101 outputs the received transmission request information to the version confirming unit 102.

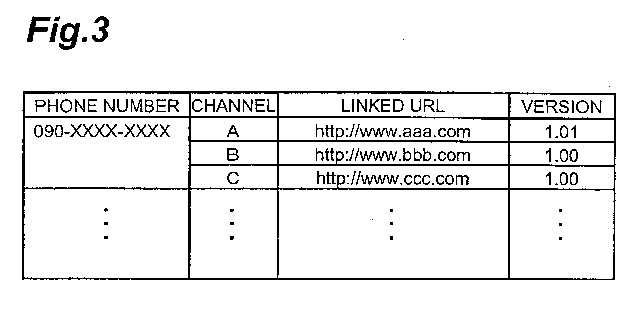

The version confirming unit 102 is a part that receives the version information of the content from the content server 40. More specifically, when the version confirming unit 102 receives the transmission request information from the request information receiving unit 101, it first references the user information database 103. Fig. 3 shows an example of information stored in this user information database 103. In the example shown in Fig. 3, for each terminal identification information (phone number) "090-XXXX-XXXX" of communication terminal 20, pieces of link information (linked URLs) "http://www.aaa.com," "http://www.bbb.com," and "http://www.ccc.com" of content servers 40 (40A, 40B, 40C) set in the respective channels A, B, C, and pieces of version information of the contents already delivered to the communication terminal 20 in the respective channels A, B, C (which will be referred to hereinafter as "delivered version information") "1.01," "1.00," and "1.00" are stored in association with each other. Then the version confirming unit 102 transmits the version request information to request transmission of the version information of the contents, to the respective content servers 40 (40A, 40B, 40C) the link information of which is stored in the user information database 103, and when the version confirming unit 102 receives the version information transmitted from the respective content servers 40 (40A, 40B, 40C) in response thereto (which will be referred to hereinafter as "server-side version information"), it outputs the server-side version information to the determining unit 104. The version confirming unit 102 retrieves the link information and delivered version information of each channel A, B, C from the user information database 103 and outputs them together with the transmission request information to the determining unit 104. The foregoing version information can also be an updating date of each content.

The determining unit 104 is a part that determines whether a content server 40 belongs to either group A (first attribute) or group B (second attribute), based on an access frequency from communication terminals 20. More specifically, the determining unit 104 references the server registration accepting unit 105 on the basis of the link information received from the version confirming unit 102. When the link information is one registered in the server registration accepting unit 105, the determining unit 104 generates determination result information to indicate a result of a determination that the linked content server 40 belongs to group A; when the link information is unregistered, the determining unit 104 generates determination result information to indicate a result of a determination that the linked content server 40 belongs to group B. The determining unit 104 outputs the generated determination result information, together with the server-side version information, delivered version information, link information, and transmission request information, to the content combining unit 106.

The server registration accepting unit 105 is a part that accepts registration of a content server 40. The server registration accepting unit 105 has a database (not shown) storing the link information of content servers 40, and when it accepts a request for registration from a content server 40 the access frequency of which from communication terminals 20 is not less than a predetermined value, the server registration accepting unit 105 newly stores the link information of the content server 40 in the database.

The content combining unit 106 is a part that constitutes a portion of the content transmitting means and that combines the contents of the respective content servers 40 (40A, 40B, 40C) set in the respective channels A, B, C of the communication terminal 20. On the occasion of acquiring a content to be combined, this content combining unit 106 performs different processes depending upon whether a content server 40 providing the content belongs to group A or group B.

Specifically, concerning a content of a content server 40 determined to belong to group A by the determining unit 104, the content combining unit 106 acquires the content from the content server 40 with the first request from any one of communication terminals 20 and stores the content in the content storing unit 107 upon transmission thereof to the communication terminal 20. With the second or subsequent requests for the same content from the communication terminals 20, the content combining unit 106 retrieves the content from the content storing unit 107 to acquire it. Concerning a content of a content server 40 determined to belong to group B by the determining unit 104, the content combining unit 106 acquires the content from the content server 40 with every reception of the transmission request information.

More specifically, when a content server 40 belongs to group A, the content combining unit 106 first determines whether the delivered version information of the content server 40 received from the determining unit 104 is the latest version. When the delivered version information is the latest version (i.e., when the delivered version information coincides with the server-side version information), the content combining unit 106 determines that the transmission of the content is the second or subsequent transmission to the communication terminals 20. Namely, this case corresponds to a case where the content of the latest version has already been transmitted to the communication terminal 20 having sent the request for transmission of the content and where no update is made for the content in the content server 40. In this case, the content combining unit 106 retrieves the corresponding content from the content storing unit 107 to acquire it, and updates (or checks) the delivered version information in the user information database 103 in accordance with the version information of the acquired content.

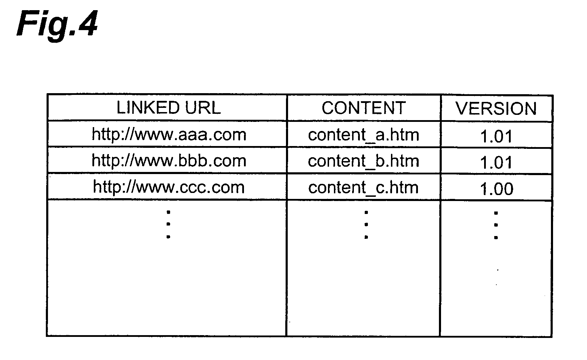

On the other hand, when the server-side version information is newer than the delivered version information, the content combining unit 106 references the content storing unit 107. This content storing unit 107 is a part that stores contents having already been transmitted to communication terminals 20, among contents of content servers 40 belonging to group A. Fig. 4 shows an example of information stored in the content storing unit 107. In the example shown in Fig. 4, the link information (linked URLs) of the content servers 40 (40A, 40B, 40C), contents "content_a.htm," "content_b.htm," "content_c.htm," and the version information of these contents (which will be referred to hereinafter as "in-storage version information") "1.01," "1.01," "1.00" are stored in association with each other. In addition to the above-described htm format, the file format of each content may be, for example, "content_a.swf" (flash file), "content_a.mp4) (movie file), "content_a.gif" or "content_a.jpg" (picture file), or the like.

Then the content combining unit 106 compares the in-storage version information with the server-side version information to determine whether the in-storage version information is the latest version. When the in-storage version information is the latest version (i.e., when the in-storage version information coincides with the server-side version information), the content combining unit 106 determines that the transmission of the content is the second or subsequent transmission thereof to the communication terminal 20. Namely, this case corresponds to a case where the content of the latest version has not been transmitted yet to the communication terminal 20 requesting the transmission of the content, the content of the latest version has already been transmitted to another communication terminal 20, and the content has already been stored in the content storing unit 107. In this case, the content combining unit 106 retrieves the corresponding content from the content storing unit 107 to acquire it, and updates the delivered version information in the user information database 103 in accordance with the version information of the acquired content.

When the server-side version information is newer than the in-storage version information, the transmission of the content is determined to be the first to the communication terminal 20. Namely, this case corresponds to a case where an update is made for the content in the content server 40, the content has not been transmitted to any one of the communication terminals 20, and the content has not been stored yet in the content storing unit 107. In this case, the content combining unit 106 outputs instruction information to instruct the content acquiring unit 108 to download the content, and acquires the content downloaded from the content server 40 by the content acquiring unit 108 in response thereto. Then the content combining unit 106 stores the acquired content in the content storing unit 107 and updates the in-storage version information in the content storing unit 107 and the delivered version information in the user information database 103 in accordance with the version information of the acquired content.

On the other hand, when a content server 40 belongs to group B, the content combining unit 106 does not reference the content storing unit 107. The content combining unit 106 immediately outputs instruction information to instruct the content acquiring unit 108 to download the content, and acquires the content downloaded from the content server 40 by the content acquiring unit 108 in response thereto. Then the content combining unit 106 updates the delivered version information in the user information database 103 in accordance with the version information of the acquired content. After the content combining unit 106 acquires the contents for all the content servers 40 set in the channels A, B, C, according to the above-described control, it combines the contents, and outputs them to the content transmitting unit 109.

The content acquiring unit 108 is a part that downloads a content from a content server 40 through the Internet 30. When the content acquiring unit 108 receives the instruction information to instruct a download of a content, from the content combining unit 106, it transmits download request information to request the download of the content, to the content server 40 identified by this instruction information. Then the content acquiring unit 108, after completion of the download of the content from the content server 40, outputs the content together with the transmission request information to the content combining unit 106.

The content transmitting unit 109 is a part that transmits contents through the communication network 10 to the communication terminal 20. When the content transmitting unit 109 receives contents from the content combining unit 106, it transmits the contents to the communication terminal 20 identified by the transmission request information.

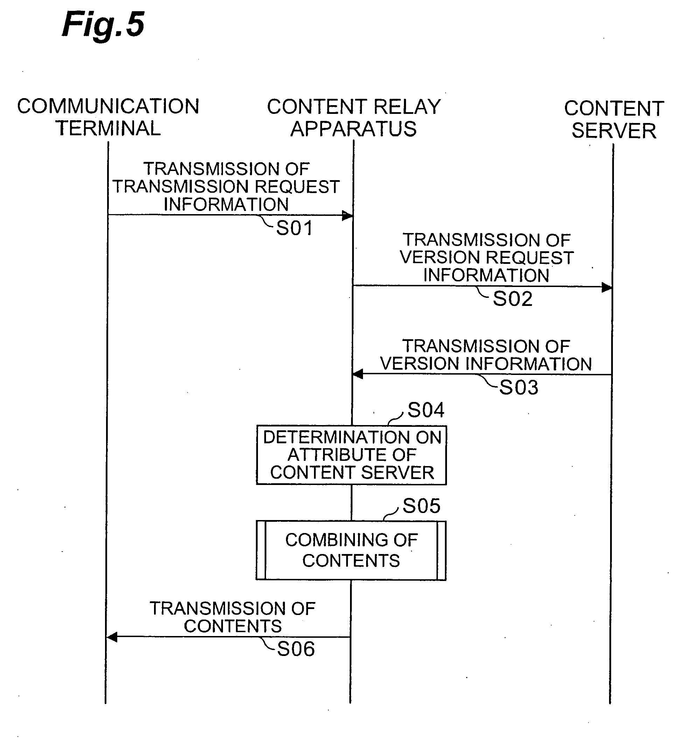

Subsequently, the operation of the above-described content relay apparatus 1 will be described with reference to the sequence diagram shown in Fig. 5.

For new acquisition or updating of contents displayed in the respective channels A, B, C at a communication terminal 20, the communication terminal 20 first transmits the transmission request information to the content relay apparatus 1 (step S01). This transmission request information is received by the request information receiving unit 101 and is outputted to the version confirming unit 102. Then the version confirming unit 102 transmits the version request information to request transmission of the version information of the contents, to the respective content servers 40 the link information of which is stored in the user information database 103 (step S02). Each of the content servers 40 receiving the version request information transmits the server-side version information to the version confirming unit 102 (step S03). The version confirming unit 102 outputs the received server-side version information to the determining unit 104. The version confirming unit 102 retrieves the link information and delivered version information of the respective channels A, B, C from the user information database 103 and outputs them along with the transmission request information to the determining unit 104.

Next, the determining unit 104 references the server registration accepting unit 105 on the basis of the link information received from the version confirming unit 102. When the link information is registered in the server registration accepting unit 105, the determining unit 104 generates the determination result information to indicate the result of the determination that the linked content server 40 belongs to group A; when the link information is not registered, the determining unit 104 generates the determination result information to indicate the result of the determination that the linked content server 40 belongs to group B (step S04). The determining unit 104 outputs the generated determination result information, together with the server-side version information, delivered version information, link information, and transmission request information, to the content combining unit 106.

The content combining unit 106, receiving the pieces of information from the determining unit 104, combines the contents of all the content servers 40 set in the channels A, B, C (step S05), and outputs the combined contents along with the transmission request information to the content transmitting unit 109. Then the content transmitting unit 109 transmits the contents to the communication terminal 20 having transmitted the transmission request information (step S06), thereby implementing the new acquisition/updating of the contents displayed in the respective channels A, B, C of this communication terminal 20.

The process in step S05 described above will be described below in further detail. On the occasion of acquiring a content to be combined, the content combining unit 106 performs different processes, depending upon whether the content server 40 providing the content, belongs to group A or group B.

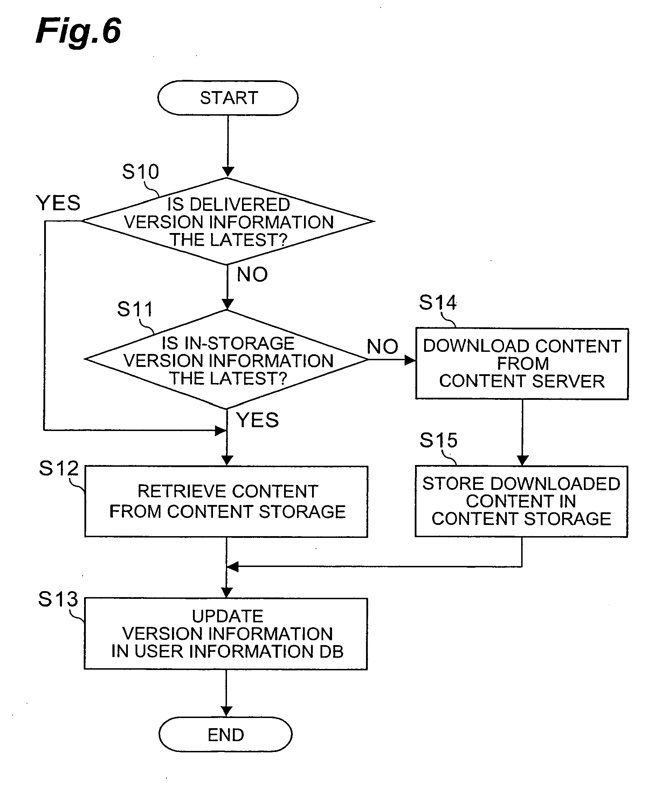

Fig. 6 shows a flowchart in the case where the content server 40 belongs to group A. In this case, the content combining unit 106 first compares the delivered version information received from the determining unit 104, with the server-side version information to determine whether the delivered version information is the latest version (step S10). When the delivered version information is the latest version (i.e., when the delivered version information coincides with the server-side version information), the content combining unit 106 skips step S11 and retrieves the corresponding content from the content storing unit 107 to acquire it (step S12), and updates (or checks) the delivered version information in the user information database 103 in accordance with the version information of the acquired content (step S13).

On the other hand, when it is determined in step S10 that the server-side version information is newer than the delivered version information, the content combining unit 106 references the content storing unit 107. Then the content combining unit 106 compares the in-storage version information with the server-side version information to determine whether the in-storage version information is the latest version (step S11). When the in-storage version information is the latest version (i.e., when the in-storage version information coincides with the server-side version information), the content combining unit 106 retrieves the corresponding content from the content storing unit 107 to acquire it (step S12), and updates the delivered version information in the user information database 103 in accordance with the version information of the acquired content (step S 13).

When it is determined in step S11 that the in-storage version information is not the latest version, the content combining unit 106 outputs the instruction information to instruct the content acquiring unit 108 to download the content, and acquires the content downloaded from the content server 40 by the content acquiring unit 108 in response thereto (step S 14). Then the content combining unit 106 stores the acquired content in the content storing unit 107 (step S15), and updates the in-storage version information in the content storing unit 107 and the delivered version information in the user information database 103 in accordance with the version information of the acquired content (step S13).

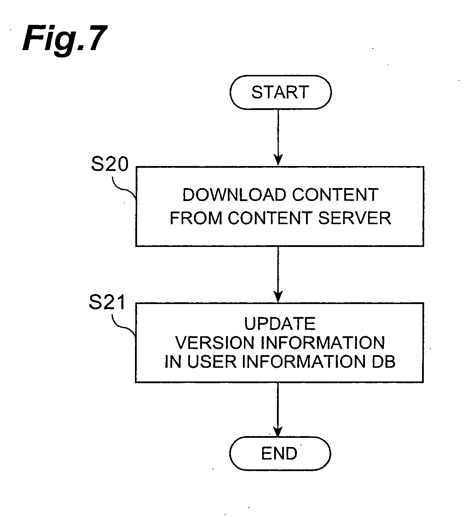

Fig. 7 shows a flowchart in the case where the content server 40 belongs to group B. In this case, the content combining unit 106 immediately outputs the instruction information to instruct the content acquiring unit 108 to download the content, and acquires the content downloaded from the content server 40 by the content acquiring unit 108 in response thereto (step S20). Then the content combining unit 106 updates the delivered version information in the user information database 103 in accordance with the version information of the acquired content (step S21).

In the content relay apparatus 1 according to the present invention, as described above, a content provided by a content server 40 belonging to group A is stored in the content storing unit 107 upon the first transmission of the content to the communication terminal 20, and the content retrieved from the content storing unit 107 is transmitted to the communication terminal 20 upon the second or subsequent transmission. Whether a content server belongs to group A or group B is classified based on its access frequency. Therefore, even if there are a lot of communication terminals 20 as receivers of contents and accesses are concentrated on content servers 40 in group A with high access frequencies, the contents stored in the content storing unit 107 are transmitted to all the communication terminals 20 having the second or subsequent accesses, which effectively reduces the access time. Since contents of content servers 40 in group B with low access frequencies are not stored in the content storing unit 107, the load is reduced on the content storing unit 107.

Since the content relay apparatus 1 is configured to determine whether transmission of a content to the communication terminal 20 is the first, or the second or subsequent, based on the comparison between the in-storage version information and the server-side version information, it becomes feasible to grasp version updates of contents in the content servers 40 and to always transmit the contents of new versions to the communication terminals 20. The comparison between the delivered version information and the server-side version information permits the content relay apparatus 1 side to manage the transmitted contents and the version information of the contents for each communication terminal 20, and it simplifies the determination and achieves further effective reduction in the access time.

### [Second Embodiment]

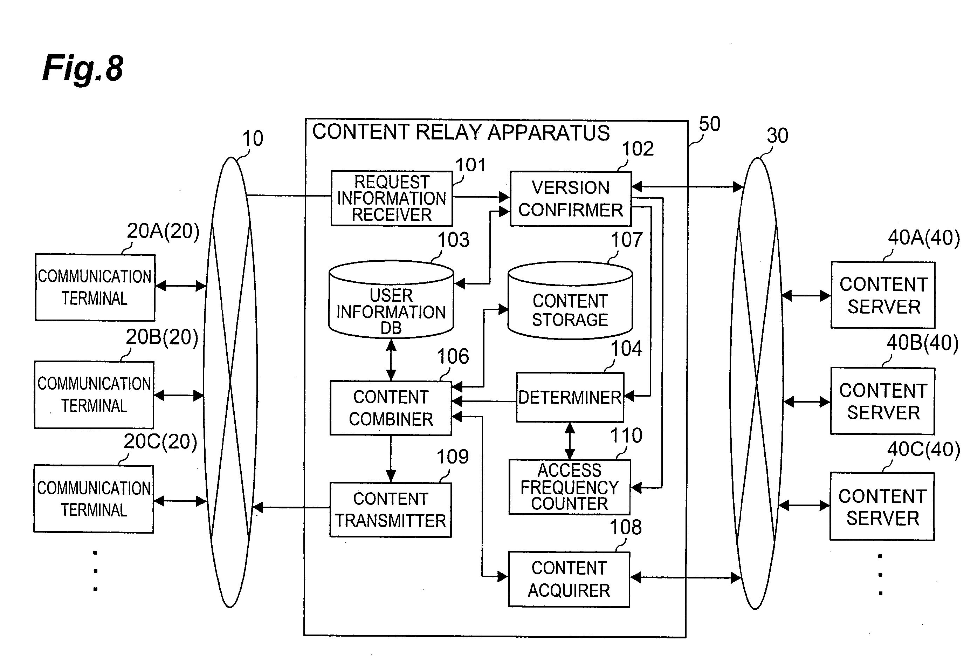

The content relay apparatus 50 according to the second embodiment is different from the first embodiment where the server registration accepting unit 105 is connected to the determining unit 104, in that an access frequency counter 110 for counting the access frequency to each content server 40 from communication terminals 20 is connected to the version confirming unit 102 and to the determining unit 104, as shown in Fig 8. Namely, in the content relay apparatus 50, a number of times of version confirmation by the version confirming unit 102 is counted for each content server 40 and this is regarded as an access frequency; the determining unit 104 determines that a content server 40 with an access frequency of not less than a predetermined value belongs to the first attribute group, and determines that a content server 40 with an access frequency of not more than the predetermined value belongs to the second attribute group.

In the content relay apparatus 50 configured as described above, the access frequency counter 110 accurately figures out the access frequency to each content server 40, and the contents stored in the content storing unit 107 are retrieved and transmitted to all the communication terminals 20 having the second or subsequent accesses to the content servers 40 with high access frequencies. Therefore, even if there are a lot of communication terminals 20 as receivers of the contents, the access time can be effectively reduced to the content servers 40 with high access frequencies. Since the contents of content servers 40 with low access frequencies are not stored in the content storing unit 107, the load is also reduced on the content storing unit 107.

Since the content relay apparatus 50 is also configured to determine whether transmission of a content is the first, or the second or subsequent to the communication terminal 20, based on the comparison between the in-storage version information and the server-side version information, it becomes feasible to grasp version updates of the contents in the content servers 40 and to always transmit the contents of new versions to the communication terminals 20. The comparison between the delivered version information and the server-side version information permits the content relay apparatus 50 side to manage the transmitted contents and the version information of the contents for each communication terminal, and it simplifies the aforementioned determination and achieves further effective reduction in the access time.

## Claims

1. A content relay apparatus for transmitting to each of a plurality of communication terminals belonging to a communication network, a content transmitted from a content server through communication means different from the communication network, the content relay apparatus comprising:
request information receiving means for receiving through the communication network, transmission request information to request transmission of a content, which is transmitted from any one of the communication terminals;
content transmitting means for transmitting to the communication terminal through the communication network, the content received through the communication means from the content server, in accordance with reception of the transmission request information; and
determining means for determining whether the content server belongs to either a first attribute group or a second attribute group, based on an access frequency from the communication terminals;
wherein, concerning a content transmitted from a content server determined to belong to the first attribute group by the determining means, the content transmitting means stores the content in content storing means upon first transmission of the transmitted content to any one of the plurality of communication terminals, and the content transmitting means transmits the content retrieved from the content storing means, upon second or subsequent transmission of the content transmitted from the content server, to any one of the plurality of communication terminals.

2. The content relay apparatus according to claim 1, wherein, concerning a content transmitted from a content server determined to belong to the second attribute group by the determining means, the content transmitting means receives the content from the content server with every reception of the transmission request information and transmits the content to the communication terminal.

3. The content relay apparatus according to claim 1 or 2, further comprising registration accepting means for accepting registration of the content server,
wherein when the content server is registered in the registration accepting means, the determining means determines that the content server belongs to the first attribute group, and when the content server is not registered, the determining means determines that the content server belongs to the second attribute group.

4. The content relay apparatus according to claim 1 or 2, further comprising counting means for counting the access frequency to the content server from the communication terminals,
wherein when the access frequency counted by the counting means is not less than a predetermined value, the determining means determines that the content server belongs to the first attribute group, and when the access frequency is not more than the predetermined value, the determining means determines that the content server belongs to the second attribute group.

5. The content relay apparatus according to any one of claims 1 to 4, further comprising:
user information storing means for storing, for each terminal identification information to identify each said communication terminal, link information to a content server providing a content to be received by the communication terminal, and version information of the content already delivered from the content server to the communication terminal, in association with each other; and
version confirming means for receiving the version information of the content from the content server the link information of which is stored in the user information storing means, in accordance with reception of the transmission request information from the communication terminal;
wherein when the version information received by the version confirming means is newer than the version information of the content stored in the content storing means, the content transmitting means determines that transmission of the content is the first transmission to any one of the plurality of communication terminals, and when the received version information coincides with the stored version information, the content transmitting means determines that transmission of the content is the second or subsequent transmission to any one of the plurality of communication terminals.

6. A content relay method of transmitting to each of a plurality of communication terminals belonging to a communication network, a content transmitted from a content server through communication means different from the communication network, the content relay method comprising:
a reception step wherein request information receiving means receives through the communication network, transmission request information to request transmission of a content, which is transmitted from any one of the communication terminals;
a transmission step wherein content transmitting means transmits through the communication network to the communication terminal, the content received through the communication means from the content server, in accordance with reception of the transmission request information; and
a determination step wherein determining means determines whether the content server belongs to either a first attribute group or a second attribute group, based on an access frequency from the communication terminals;
wherein in the transmission step, concerning a content transmitted from a content server determined to belong to the first attribute group by the determining means, the content transmitting means stores the content in content storing means upon first transmission of the transmitted content to any one of the plurality of communication terminals, and the content transmitting means transmits the content retrieved from the content storing means, upon second or subsequent transmission of the content transmitted from the content server, to any one of the plurality of communication terminals,.
